(19) Europäisches Patentamt
European Patent Office
Office européen des brevets

(11) Veröffentlichungsnummer: **0 185 184**
**B1**

(12) # EUROPÄISCHE PATENTSCHRIFT

(45) Veröffentlichungstag der Patentschrift: **31.08.88**

(21) Anmeldenummer: **85114110.1**

(22) Anmeldetag: **06.11.85**

(51) Int. Cl.⁴: **C 08 G 18/08,** C 08 G 18/10, C 08 G 18/38, C 08 G 18/28, C 08 G 18/83, C 09 D 3/49, C 09 J 3/16, C 07 C 127/01, B 05 D 7/26, C 03 C 25/02, D 06 M 15/37

(54) **Verfahren zur Herstellung von Flächengebilden.**

(30) Priorität: **16.11.84 DE 3441934**

(43) Veröffentlichungstag der Anmeldung: **25.06.86 Patentblatt 86/26**

(45) Bekanntmachung des Hinweises auf die Patenterteilung: **31.08.88 Patentblatt 88/35**

(84) Benannte Vertragsstaaten: **AT BE CH DE FR GB IT LI NL SE**

(56) Entgegenhaltungen:
**DE-C-912 090**
**FR-A-891 539**
**US-A-4 465 825**

(73) Patentinhaber: **BAYER AG, Konzernverwaltung RP Patentabteilung, D-5090 Leverkusen 1 Bayerwerk (DE)**

(72) Erfinder: **Schäfer, Walter, Dr., Wolfskaul 6, D-5000 Köln 80 (DE)**
Erfinder: **Hajek, Manfred, Dr., Hahnenweg 1, D-5000 Köln 80 (DE)**
Erfinder: **Müller, Hanns Peter, Dr., Im Kerberich 6, D-5068 Odenthal (DE)**
Erfinder: **Dhein, Rolf, Dr., Deswatinesstrasse 30, D-4150 Krefeld 1 (DE)**
Erfinder: **Küchenmeister, Rolf, Dr., Dreikönigenstrasse 119, D-4150 Krefeld 1 (DE)**
Erfinder: **Sickert, Armin, Schreberstrasse 9, D-4150 Krefeld (DE)**

**EP 0 185 184 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft ein neues Verfahren zur Herstellung von wasser- und lösungsmittelbeständigen Flächengebilden durch Beschichtung beliebiger Substrate mit Lösungen oder Dispersionen von bestimmten, anionisch modifizierten Polyisocyanat-Additionsprodukten in einem wäßrigen Lösungs- oder Dispergiermittel und anschließende Hitzebehandlung der resultierenden Beschichtung.

Wäßrige Lösungen oder Dispersionen von anionisch modifizierten Polyisocyanat-Additionsprodukten, insbesondere wäßrige Dispersionen von anionisch modifizierten Polyurethanen bzw. Polyurethan-Polyharnstoffen und ihre Verwendung zur Herstellung von Überzügen sind bereits bekannt (vgl. z. B. DE-PS-1 184 946, DE-PS-1 178 586, DE-AS-1 237 306, DE-OS-1 495 745, DE-OS-1 595 602, DE-OS-1 770 068, DE-OS-2 019 324, DE-OS-2 314 512, oder auch D. Dieterich et al., Angew. Chem. 82, 53 (1970)).

Die Dispergierbarkeit der in diesen Dispersionen vorliegenden Polyisocyanat-Polyadditionsprodukte beruht auf der Anwesenheit von eingebauten ionischen Zentren, insbesondere von eingebauten Sulfonat- oder Carboxylatgruppen. Bei der Herstellung von Flächengebilden aus diesen Dispersionen verbleiben im allgemeinen die ionischen Zentren in den resultierenden Flächengebilden, was eine Verminderung der Wasserresistenz der resultierenden Beschichtung zur Folge hat.

Es war daher die der Erfindung zugrundeliegende Aufgabe, ein neues Verfahren zur Herstellung von Flächengebilden unter Verwendung von wäßrigen Lösungen oder Dispersionen von anionisch modifizierten Polyisocyanat-Additionsprodukten zur Verfügung zu stellen, welches nicht mit diesem gravierender Nachteil behaftet ist.

Diese Aufgabe konnte durch das nachstehend näher beschriebene erfindungsgemäße Verfahren gelöst werden.

Gegenstand der Erfindung ist ein

Verfahren zur Herstellung von wasser- und lösungsmittelresistenten Flächengebilden durch Beschichtung von hitzeresistenten Substraten mit einer, gegebenenfalls übliche Hilfs- und Zusatzmittel der Beschichtungstechnologie enthaltenden Lösung oder Dispersion eines eingebaute anionische Struktureinheiten aufweisenden Polyisocyanat-Additionsprodukts in einem wäßrigen Lösungs- oder Dispergiermittel und anschließende Hitzebehandlung der Beschichtung bei 60 bis 200° C unter Verdunsten oder Verdampfen des Lösungs- oder Dispergiermittels und gleichzeitiger Vernetzung des auf das Substrat aufgetragenen Polyisocyanat-Additionsprodukts, dadurch gekennzeichnet, daß man als Polyisocyanat-Additionsprodukt eingebaute anionische Struktureinheiten der Formel

$$-NH-CO-N^{\ominus}-C\equiv N$$

in einer Menge von 50 bis 500 Milliäquivalenten pro 100 g Feststoff enthaltende Umsetzungsprodukte von

NCO-Prepolymeren auf Basis von (i) einfachen organischen Polyisocyanaten des Molekulargewichtsbereichs 168 bis 300 oder von (ii) Biuret -, Isocyanurat-, Uretdion- oder Oxadiazintriongruppen aufweisenden, modifizierten Polyisocyanaten der unter (i) genannten Art und beliebigen, aus der Polyurethanchemie an sich bekannten Polyhydroxylverbindungen des Molekulargewichtsbereichs 62-4000, wobei die NCO-Prepolymeren unter Einhaltung eines NCO/OH-Äquivalentverhältnisses von 1,2 : 1 bis 8 : 1 hergestellt werden sind,

mit

Salzen des Cyanamids und Basen ausgewählt aus der Gruppe bestehend aus Ammoniak, unter den Bedingungen der Hitzebehandlung flüchtigen primären und sekundären Aminen mit einem pKb-Wert von minimal 3,1, unter den Bedingungen der genannten Hitzebehandlung flüchtigen tertiären Aminen und beliebigen Gemischen derartiger Basen,

verwendet.

Die US-A-4 465 825 beschreibt zwar u.a. bereits ein Verfahren zur Herstellung von hochmolekularen Kunststoffen durch Umsetzung von NCO-Prepolymeren mit Cyanamid zu den entsprechenden Cyanharnstoffen und deren thermische Kettenverlängerung, jedoch enthält diese Vorveröffentlichung keinerlei Hinweis auf die erfindungsgemäß aufgefundene Möglichkeit, die charakteristische anionische Struktureinheit der genannten Formel aufweisende Prepolymere in Wasser zu dispergieren bzw. zu lösen und die so erhaltenen Dispersionen bzw. Lösungen zur Herstellung von Flächengebilden einzusetzen.

Auch die FR-PS-891 539 bzw. die DE-PS-912 090 vermitteln keinen Hinweis darauf, daß es möglich sein würde, höhermolekulare, Cyanharnstoffgruppen aufweisende Polyisocyanat-Additionsprodukte, die als Gegenion solche auf Basis von Ammoniak oder von flüchtigen organischen Aminen aufweisen, in Form von stabilen wäßrigen Lösungen oder Dispersionen herzustellen, da in diesen Vorverröffentlichungen lediglich die Stabilisierung bzw. Löslichkeit in Wasser von niedermolekularen Cyanharnstoffen angesprochen wird. Außerdem wird in der FR-PS-891 539 darauf hingewiesen, daß die Löslichkeit der niedermolekularen Verbindungen durch Einfügung weiterer hydrophiler Zentren verbessert werden kann (Seite 3, Zeilen 99-104), was nur den Schluß zuläßt, daß die Löslichkeit bzw. Dispergierbarkeit in Wasser von niedermolekularen, neutralisierte Cyanharnstoffgruppen aufweisenden Verbindungen beschränkt ist, und daß die solubilisierende Wirkung dieser Gruppen zur Lösung bzw. Dispergierung von höhermolekularen Prepolymeren unzureichend ist.

Die beim erfindungsgemäßen Verfahren zu verwendenden Lösungen oder Dispersionen bestehen im wesentlichen aus

a) Wasser oder einem Gemisch aus Wasser mit organischen Lösungsmitteln mit einem Wassergehalt des

Gemischs von mindestens 50 Gew.-%;

b) in diesem Lösungs- bzw. Dispergiermittel gelösten bzw. dispergierten Umsetzungsprodukten von organischen Polyisocyanaten mit Salzen des Cyanamids und bestimmten, ausgewählten Basen der nachstehend näher beschriebenen Art, welche Umsetzungsprodukte einen Gehalt an eingebauten anionische Struktureinheiten der Formel

$-NH-CO-N^{\ominus}-C{\equiv}N$

von 50 bis 500 Milliäquivalenten pro 100 g Feststoff aufweisen, bei einem Gehalt der Lösungen oder Dispersionen an diesen Umsetzungsprodukten von vorzugsweise 5 bis 95, besonders bevorzugt 20 bis 80 Gew.-% und, gegebenenfalls,

c) den üblichen aus der Beschichtungstechnologie bekannten Hilfs- und Zusatzmitteln.

Bei dem Lösungs- oder Dispergiermittel handelt es sich, wie gesagt, um reines Wasser oder um ein Gemisch aus Wasser und Lösungsmittel. Geeignete Lösungsmittel sind insbesondere mit Wasser mischbare Lösungsmittel wie z. B. Aceton, Methanol, Ethanol, Methylethylketon, N-Methylpyrrolidon, Tetrahydrofuran oder auch an sich mit Wasser nicht verträgliche Lösungsmittel wie z.B. Ethylacetat, n-Butanol oder Toluol. Im Falle der Mitverwendung derartiger, mit Wasser an sich nicht mischbarer Lösungsmittel, muß deren Menge jedoch so begrenzt werden, daß homogene Lösungen oder Dispersionen der Polyisocyanat-Additionsprodukte vorliegen. Größere Mengen derartiger Lösungsmittel werden daher, falls sie vorher zur Herstellung der Additionsprodukte eingesetzt worden sind, durch Dekantieren (vom unlöslichen Additionsprodukt) oder destillativ (aus der Lösung oder der Dispersion) entfernt.

Bei der Komponente b) handelt es sich um Umsetzungsprodukte von organischen Polyisocyanaten mit bestimmten Salzen des Cyanamids.

Zur Herstellung dieser Polyisocyanat-Additionsprodukte geeignete Polyisocyanate sind höhermolekulare NCO-Prepolymere auf Basis von organischen Polyisocyanaten ausgewählt aus der Gruppe bestehend aus (i) einfachen organischen Polyisocyanaten des Molekulargewichtsbereichs 168-300 wie z. B. 1,6-Diisocyanatohexan, 1-Isocyanato-3,3,5-trimethyl-5-isocyanatomethyl-cyclo-hexan, 2,4- und/oder 2,6-diisocyanatotoluol, 4,4'- und/ oder 2,4'-Diisocyanatodiphenylmethan oder 4,4'-Diisocyanatodicyclohexylmethan und (ii) modifizierten "Lackpolyisocyanaten" mit einem mittleren Molekulargewicht bis 1000, d. h. Biuret-, Isocyanurat-, Uretdion- oder Oxadiazintriongruppen aufweisenden, modifizierten Polyisocyanaten auf Basis dieser einfachen Polyisocyanate, und aus der Polyurethanchemie an sich bekannten Polyhydroxylverbindungen des Molekulargewichtsbereichs 62-4000.

Zu letzteren gehören beispielsweise Ethylenglykol, Propylenglykol, Trimethylolpropan und/oder Glycerin oder Ethergruppen aufweisende, mehrwertige Alkohole wie z. B. Diethylenglykol, Dipropylenglykol, Tripropylenglykol, Tetrapropylenglykol, höhermolekulare Polyetherpolyole, wie sie durch Alkoxylierung von geeigneten Startermolekülen wie z. B. den genannten einfachen mehrwertigen Alkoholen unter Verwendung von Ethylenoxid und/oder Propylenoxid erhalten werden können oder Polyesterpolyole, wie sie beispielsweise durch Umsetzung von mehrbasischen Säuren bzw. deren Anhydriden wie z. B. Adipinsäure, Phthalsäure, Tetrahydrophthalsäure, Hexahydrophthalsäure, Maleinsäure, gegebenenfalls in Abmischung mit untergeordneten Mengen an einbasischen Säuren wie z.B. Benzoesäure oder Fettsäuren mit überschüssigen Mengen an mehrwertigen Alkoholen, insbesondere den oben beispielhaft genannten Ethergruppen-freien einfachen Alkoholen in an sich bekannter Weise zugänglich sind.

Bei der Herstellung dieser NCO-Prepolymeren werden die beispielhaft genannten Polyisocyanate bzw. beliebige Gemische dieser Polyisocyanate mit unterschüssigen Mengen der beispielhaft genannten Polyhydroxylverbindungen oder beliebiger Gemische der beispielhaft genannten Polyhydroxylverbindungen, unter Einhaltung eines NCO/OH-Äquivalentverhältnisses von 1,2 : 1 bis 8 : 7, vorzugsweise 1,5 : 7 bis 3 : 1, zur Reaktion gebracht. Bei den "Prepolymeren" handelt es sich, wie aus diesem NCO/OH-Äquivalentverhältnis ersichtlich, oftmals um sogenannte "Semiprepolymere", d. h. um Gemische von überschüssigem, nicht umgesetztem Ausgangspolyisocyanat mit echten, Urethangruppen aufweisenden NCO-Prepolymeren. Auch derartige "Semiprepolymere" können bei der Herstellung der erfindungsgemäß zu verwendenden Polyisocyanat-Addukte eingesetzt werden.

Gut geeignet sind insbesondere die NCO-Prepolymeren auf Basis von Tris-(6-isocyanatohexyl)-biuret oder dessen Gemischen mit seinen höheren Homologen oder auf Basis von Tris-(6-isocyanatohexyl)-isocyanurat oder dessen Gemischen mit seinen höheren Homologen und gegebenenfalls mit Bis-(6-isocyanato-hexyl)-uretdion oder Bis-(6-isocyanatohexyl)-oxadiazintrion.

Grundsätzlich ist es auch möglich, bei der Herstellung der Polyisocyanat-Additionsprodukte ionisch modifizierte Aufbaukomponenten der aus der Chemie der Polyurethandispersionen an sich bekannten Art mitzuverwenden, um zu Polyisocyanat-Additonsprodukten zu gelangen, die außer den erfindungswesentlichen anionischen Struktureinheiten der obengenannten allgemeinen Formel noch eingebaute Carboxylat- oder Sulfonatgruppen aufweisen. Dies wäre beispielsweise dadurch möglich, daß man NCO-Prepolymere einsetzt, die unter Verwendung bzw. Mitverwendung von Carboxylat- oder Sulfonatgruppen aufweisenden mehrwertigen Alkoholen oder unter Verwendung der entsprechenden Hydroxycarbonsäuren bzw. Hydroxysulfonsäuren unter anschließender Neutralisation der Säuregruppen hergestellt worden sind. Die Mitverwendung derartiger anionischer Aufbaukomponenten ist jedoch weniger bevorzugt, da einerseits die Hydrophilie der erfindungswesentlichen anionischen Struktureinheit für die Löslichkeit bzw. Dispergierbarkeit

der Polyisocyanat-Additionsprodukte im allgemeinen ausreicht, und da andererseits bei Mitverwendung derartiger anionischer Aufbaukomponenten die eingebauten anionischen Gruppen in den letztendlich erhaltenen Flächengebilde weiterhin vorliegen würden, was dem Zweck der Erfindung zuwiderlaufen würde.

Es ist weiterhin möglich, bei der Herstellung der erfindungsgemäß zu verwendenden Polyisocyanat-Additionsprodukte organischer Polyisocyanate der beispielhaft genannten Art einzusetzen, deren Isocyanatgruppen teilweise mit Blockierungsmitteln für Isocyanatgruppen wie z. B. Phenol, ε-Caprolactam, Malonsäurediethylester, Acetessigsäureethylester oder Oximen wie Cyclohexanonoxim blockiert sind. Falls derartige teilblockierte Polyisocyanate zur Herstellung der Polyisocyanat-Additionsprodukte eingesetzt werden, müssen in diesen jedoch stets noch so viele freie Isocyanatgruppen vorliegen, daß bei der Umsetzung mit den Ammoniumsalzen des Cyanamids noch genug anionische Struktureinheiten der obengenannten Formel entstehen, um die Löslichkeit bzw. Dispergierbarkeit der Polyisocyanat-Additonsprodukte in den Lösungs- bzw. Dispergiermittel zu gewährleisten. Die bei der Verwendung von teilblockierten Polyisocyanaten resultierenden Polyisocyanat-Additionsprodukte enthalten naturgemäß blockierte Isocyanatgruppen, die zu einer noch stärkeren Hitzevernetzung der Beschichtungen beitragen können. Im allgemeinen ist es jedoch nicht erforderlich, beim erfindungsgemäßen Verfahren Polyisocyanat-Additionsprodukte auf Basis von teilblockierten Polyisocyanaten einzusetzen, da die erfindungsgemäßen Beschichtungen auch ohne Vorliegen von blockierten Isocyanatgruppen einwandfrei hitzevernetzbar sind. Im allgemeinen weist die Polyisocyanatkomponente, die zur Herstellung der Polyisocyanat-Additionsprodukte eingesetzt wird, einen NCO-Gehalt von 4 bis- 25 Gew.-% auf. Zur Herstellung der Polyisocyanat-Additionsprodukte werden diese mit Ammoniumsalzen von Cyanamid zur Reaktion gebracht. Diese Ammoniumsalze können als solche eingesetzt werden oder auch in situ durch gleichzeitige Verwendung von Cyanamid und geeigneten Basen hergestellt werden. Geeignete Ammoniumsalze des Cyanamids sind solche auf Basis von (i) Ammoniak, (ii) primären oder sekundären Aminen mit einem pKb-Wert von minimal 3,1 wie z. B. Methylamin, Dimethylamin, Ethylamin, tert.-Butylamin und (iii) beliebigen tert. Aminen wie z. B. Trimethylamin, Triethylamin, Tripropylamin, Dimethylaminoethanol, N-Methyl-diethanolamin oder Triethanolamin.

Für daß erfindungsgemäße Verfahren geeignete Amine sind solche, die unter den Bedingungen der Hitzebehandlung der beim erfindungsgemäßen Verfahren erhaltenen Flächengebilde verdampfen bzw. verdunsten. Die Zersetzung (Spaltung der salzartigen Cyanharnstoff-Ammonium-Gruppe unter Freisetzung des Amins) bei der Hitzebehandlung der Flächengebilde ist eine Voraussetzung für deren einwandfreie chemische Aushärtung.

Die Herstellung der Polyisocyanat-Additionsprodukte aus den genannten Ausgangsmaterialien erfolgt im allgemeinen im Temperaturbereich von 0 bis 80, vorzugsweise 5 bis 50°C in organischem oder wäßrigem Milieu, vorzugsweise unter Herstellung der Ammoniumsalze in situ in dem jeweiligen Reaktionsgemisch. Die Menge des Cyanamids wird hierbei in der Regel so bemessen, daß ein Molverhältnis von freien Isocyanatgruppen zu Cyanamid von 0,5 : 1 bis 1,5 : 1, vorzugsweise 0,8 : 1 bis 1,2 : 1 vorliegt. Die Menge der Base wird so bemessen, daß für jedes Mol an, mit Isocyanatgruppen umzusetzendem Cyanamid mindestens 0,5 Mol, bevorzugt 1 Mol basischer Stickstoffatome zur Verfügung steht. Die Verwendung eines Aminüberschusses ist zwar möglich, jedoch wenig sinnvoll. Die Umsetzung zwischen den Isocyanatgruppen der Polyisocyanatkomponente und den Ammoniumsalzen verläuft nach folgender Gleichung:

$$R(NCO)_n + n\,H_2N\text{-}C{\equiv}N + nNR'_3 \rightarrow$$

$$R(NH\text{-}CO\text{-}\overset{(-)}{N}\text{-}C{\equiv}N)_n + n\overset{(+)}{H}NR'_3$$

In dieser Gleichung stehen R für den indifferenten Rest des n-funktionellen Polyisocyanats und R' für Wasserstoff oder den indifferenten organischen Rest der Base.

Die Herstellung der Polyisocyanat-Additionsprodukte kann nach verschiedenen Varianten beispielsweise folgendermaßen erfolgen:

1. Umsetzung des NCO-Prepolymeren in flüssiger oder gelöster Form unter Verwendung eines organischen Lösungsmittels der oben beispielhaft genannten Art mit einem Gemisch aus Cyanamid und der zum Einsatz gelangenden Base unter anschließendem Auflösen bzw. Dispergieren des gegebenenfalls vom Lösungsmittel befreiten Umsetzungsprodukts in Wasser, gegebenenfalls unter anschließender destillativer Entfernung des Lösungsmittels aus der Lösung bzw. Dispersion.

2. Vermischen eines noch nicht prepolymerisierten organischen Polyisocyanats der oben beispielhaft genannten Art mit einer unterschüssigen Menge einer Polyhydroxylverbindung der oben beispielhaft genannten Art, Cyanamid und Base, gegebenenfalls in Gegenwart eines inerten Lösungsmittels und Herstellung sowohl des NCO-Prepolymeren als auch des Ammoniumsalzes aus Cyanamid und Base, in situ, sowie deren weitere Umsetzung in einem Eintopf-Verfahren unter weiterer Aufarbeitung des Reaktionsansatzes sowie unter 1. beschrieben.

3. Zugabe des gegebenenfalls in einem inerten Lösungsmittel der beispielhaft genannten Art gelösten NCO-Prepolymeren zu einer wäßrigen Lösung des Ammoniumsalzes des Cyanamids, gegebenenfalls unter anschließender destillativer Entfernung des Hilfslösungsmittels.

Die oben bei der Auflistung der geeigneten Lösungsmittel ebenfalls erwähnten Alkohole können selbstverständlich nicht als Lösungsmittel für die Polyisocyanat-Komponente sondern lediglich als

Lösungsmittel für das Cyanamid und die Base, d.h. das Ammoniumsalz des Cyanamids verwendet werden. Falls derartige Lösungen in alkoholischen Lösungsmitteln mit den Polyisocyanaten umgesetzt werden, stören die alkoholischen Hydroxylgruppen nicht, da die Salze des Cyanamids weit schneller mit den Isocyanaten abreagieren als die alkoholischen Hydroxylgruppen des Lösungsmittels.

In allen genannten Fällen entstehen letztendlich Lösungen oder Dispersionen der Polyisocyanat-Additionsprodukte in dem wäßrigen bzw. wäßrig-organischen Lösungs- bzw. Dispergiermittel. Ob es sich hierbei um Lösungen oder Dispersionen handelt, hängt sowohl vom Molekulargewicht des eingesetzten Polyisocyanats als auch vom Gehalt der Umsetzungsprodukte an anionischen Gruppen ab. Der Feststoffgehalt der Lösungen bzw. Dispersionen, bezogen auf die obengenannten Komponenten a) und b) ohne Einbeziehung der gegebenenfalls mitverwendeten Hilfs- und Zusatzmittel c), liegt im allgemeinen bei 5 bis 95, vorzugsweise 20 bis 80 Gew.-%.

Die so erhaltenen wäßrigen Lösungen oder Dispersionen können als solche oder nach Abmischung mit weiteren Hilfs- und Zusatzmitteln c) dem erfindungsgemäßen Verfahren zugeführt werden.

Gegebenenfalls mitzuverwendende Hilfs- und Zusatzmittel sind beispielsweise Farbstoffe, Pigmente, Verlaufshilfsmittel und ähnliche Hilfs- und Zusatzmittel der aus der Beschichtungstechnologie an sich bekannten Art.

Zur Durchführung des erfindungsgemäßen Verfahrens werden die gegebenenfalls Hilfs- und Zusatzmittel der genannten Alt enthaltenden wäßrigen Lösungen oder Dispersionen nach beliebigen Methoden der Beschichtungstechnologie auf die zu beschichtenden Substrate aufgetragen, die im Anschluß an die Beschichtung einer Hitzebehandlung bei 60 bis 200°C, vorzugsweise 80 bis 180°C unterzogen werden. Bei dieser Hitzebehandlung erfolgt nicht nur eine Verdunstung bzw. Verdampfung des Lösungs- bzw. Dispergiermittels sondern gleichzeitig eine chemische Vernetzung der Polyisocyanat-Additionsprodukte unter Abspaltung der Basen, die in Form von Ammoniumionen die Gegenionen zu den erfindungswesentlichen anionischen Struktureinheiten bilden. Bei dieser Hitzevernetzung erfolgt im wesentlichen intermediär eine Freisetzung von Polyisocyanat-Additionsprodukten mit endständigen Cyanharnstoffgruppierungen, die unter Dimerisierung unter Bildung von kettenverlängerten bzw. vernetzten, N-Cyanguanidin-Struktureinheiten aufweisenden Produkten nach folgendem Reaktionsschema weiterreagieren:

$$\text{-NH-CO-}\overset{(-)}{\text{N}}\text{-C}\equiv\text{N} + \overset{(+)}{\text{H}}\text{-NR'}_3$$

$$\text{Hitze} \rightarrow \text{-NH-CO-NH-C}\equiv\text{N} + \text{NR'}_3$$

(I)

$$2\text{I} \rightarrow \begin{array}{l}\text{-NH-CO-NH-C=NH} \\ \qquad\qquad\quad | \\ \quad\ \ \text{N}\equiv\text{C-N-CO-NH-}\end{array}$$

Der Vernetzungsgrad der letztendlich erhaltenen Flächengebilde kann durch die Funktionalität der zur Herstellung der Polyisocyanat-Additionsprodukte eingesetzten Polyisocyanate eingestellt werden. Bei Verwendung von Polyisocyanat-Additionsprodukten auf Basis von Diisocyanaten entstehen naturgemäß lineare Endprodukte, während bei Verwendung von höher als difunktionellen Diisocyanaten vernetzte Endprodukte erhalten werden.

Das erfindungsgemäße Verfahren gestattet die Herstellung von Flächengebilden der unterschiedlichsten Art. So umfaßt der Begriff "Flächengebilde" im Rahmen der Erfindung sowohl Lacküberzüge auf hitzeresistenten Substraten wie z. B. Metallen, Holz, Papier, hitzeresistenten Textilien, hitzeresistenten Ledersorten, mineralischen Substraten u. dgl. als auch Glasfaserschlichten als auch Klebstoffschichten auf miteinander zu verklebenden Substraten. Das erfindungsgemäße Verfahren eignet sich demzufolge beispielsweise zur Herstellung von Lackschichten auf Flächengebilden der beispielhaft genannten Art, für die Lederzurichtung, für die Herstellung von Glasfaserschlichten oder aber auch zur Herstellung von Verbundmaterialien durch Verkleben von hitzeresistenten Substraten wie z.B. Kork- oder Holzmehl, Holzspänen, Glasfasern, Asbest, papierartigen Materialien, Plastik oder Gummiabfällen oder keramischen Materialien mit sich selbst oder untereinander.

Die nachfolgenden Beispiele dienen der weiteren Erläuterung des erfindungsgemäßen Verfahrens. Alle Prozentangaben beziehen sich auf Gewichtsprozente.

**Beispiel 1**

Zu 169,6 g eines Polyesters des Molekulargewichts 1700 auf Basis von Adipinsäure und Hexandiol-1,6 und Neopentylglykol (Gewichtsverhältnis der Diole = 11 : 6) werden 350 g eines Biuretpolyisocyanats auf Basis von

1,6-Diiso-cyanato-hexan mit einem NCO-Gehalt von 23,9 % gegeben, und die Reaktionsmischung 3 Stunden auf 120° C aufgeheizt (NCO-Gehalt = 13,2 %).

450 g des Umsetzungsprodukts (1,4 Mol NCO) werden bei 0-10° C zu einer Mischung aus 58,6 g (1,4 Mol) Cyanamid (mit 1 % $NaH_2PO_4$ stabilisiert) und 141 g (1,4 Mol) Triethylamin in 150 ml Ethylacetat gegeben, so daß die Temperatur 25° C nicht übersteigt. Nachdem das resultierende Polyisocyanat-Additionsprodukt ausgefallen ist, wird noch 15 Minuten nachgerührt, überstehendes Ethylacetat durch Dekantieren entfernt und anschließend das Polyisocyanat-Additionsprodukt in 650 ml Wasser gelöst. Am Rotationsverdampfer im Hochvakuum bei Raumtemperatur wird die Lösung von restlichem Ethylacetat befreit. Die dann zurückbleibende wäßrige Lösung weist bei einem Feststoffgehalt von 50 % bei 22° C eine Viskosität von 260 mPa.s auf. Das gelöste Polyisocyanat-Additionsprodukt enthält 215 Milliäquivalente pro 100 g an anionischen Gruppen der erfindungswesentlichen Art.

Rakelt man die Lösung des Polyisocyanat-Additionsprodukts auf eine Glasplatte auf und verdampft das Wasser bei 100-140° C (ca. 15 Minuten), so entsteht ein transparenter, glänzender Film, der sowohl gegen kochendes Wasser als auch gegen Aceton beständig ist. Der Film übersteht mehr als 10 Reibungen mit Dimethylformamid (1 kg Belastung) ohne sichtbare Spuren.

**Beispiel 2**

In 24,2 g des Polyesterpolyols gemäß Beispiel 1 werden 50 g des Biuretpolyisocyanats gemäß Beispiel 1 gegeben und die Reaktionsmischung 3 Stunden auf 120°C aufgeheizt (NCO-Gehalt = 13,4 %). 60 g des Umsetzungsproduktes (0,19 Mol NCO), gelöst in 60 g Ethylacetat, werden bei 2° C zu einer Mischung aus 8,1 g (0,19 Mol) Cyanamid (mit 1 % $NaH_2PO_4$ stabilisiert) und 13,4 g 24 %-igem Ammoniakwasser (0,19 Mol $NH_3$) in 80 ml Wasser zugetropft. Nach dem Abdampfen des Ethylacetats am Rotationsverdampfer im Hochvakuum bei Raumtemperatur erhält man eine leicht milchige Lösung einer Viskosität von 70 mPa.s bei 22° C.

Rakelt man die Lösung auf eine Glasplatte auf und verdampit das Wasser bei 100-180° C (ca. 30 Minuten), so entsteht ein klarer, glänzender Film, der sowohl gegen Wasser als auch gegen Aceton beständig ist.

**Beispiel 3**

Zu 100,8 g (1,2 Mol NCO) Hexamethylendiisocyanat werden bei 120° C 100 g (0,3 Mol OH) eines Polyesters aus Adipinsäure, Phthalsäureanhydrid, Maleinsäureanhydrid (Gew.- Verhältnis in der angegebenen Reihenfolge = 3 : 5 : 0,3), 1,2-Dihydroxypropan und Trimethylolpropan (Gew.-Verhältnis = 3 : 2) einer OH-Zahl von 165 und einem ungefähren Molekulargewicht von 1000 gegeben und nach 45 Minuten am Rotationsverdampfer von überschüssigem Hexamethylen-diisocyanat befreit. Der Rückstand hat einen NCO-Gehalt von 3,6 %. 100 g dieses Harzes (0,085 Mol NCO) werden zu einer Mischung aus 3,6 g (0,085 Mol) Cyanamid (mit 1 % $NaH_2PO_4$ stabilisiert) und 8,59 g (0,085 Mol) Triethylamin in 40 ml Ethylacetat gegeben und anschließend mit 150 ml Wasser versetzt. Man erhält eine Dispersion eines Polyisocyanat-Additionsprodukts, welches 75 Milliäquivalente an erfindungswesentlichen anionischen Struktureinheiten pro 100 g Feststoff aufweist Die Dispersion hat bei einem Feststoffgehalt von 37 % eine Viskosität von 140 mPa.s bei 22° C und liefert bei einer Hitzebehandlung bei 160° C wasser- und acetonfeste Filme.

**Patentanspruch**

Verfahren zur Herstellung von wasser- und lösungsmittelresistenten Flächengebilden durch Beschichtung von hitzeresistenten Substraten mit einer, gegebenenfalls übliche Hilfs- und Zusatzmittel der Beschichtungstechnologie enthaltenden Lösung oder Dispersion eines eingebaute anionische Struktureinheiten aufweisenden Polyisocyanat-Additionsprodukts in einem wäßrigen Lösungs- oder Dispergiermittel und anschließende Hitzebehandlung der Beschichtung hei 60 bis 200° C unter Verdunsten oder Verdampfen des Lösungs- oder Dispergiermittels und gleichzeitiger Vernetzung des auf das Substrat aufgetragenen Polyisocyanat-Additionsprodukts, dadurch gekennzeichnet, daß man als Polyisocyanat-Additionsprodukt eingebaute anionische Struktureinheiten der Formel

$$-NH-CO-\overset{\ominus}{N}-C\equiv N$$

in einer Menge von 50 bis 500 Milliäquivalenten pro 100 g Feststoff enthaltende Umsetzungsprodukte von

NCO-Prepolymeren auf Basis von (i) einfachen organischen Polyisocyanaten des Molekulargewichtsbereichs 168 bis 300 oder von (ii) Biuret, Isocyanurat, Uretdion oder Oxadiazintriongruppen aufweisenden, modifizierten

Polyisocyanaten der unter (i) genannten Art und beliebigen, aus der Polyurethanchemie an sich bekannten Polyhydroxylverbindungen des Molekulargewichtsbereichs 62-4000, wobei die NCO-Prepolymeren unter Einhaltung eines NCO/OH-Äquivalentverhältnisses von 1,2 : 1 bis 8 : 1 hergestellt worden sind
mit
Salzen des Cyanamids und Basen ausgewählt aus der Gruppe bestehend aus Ammoniak, unter den Bedingungen der Hitzebehandlung flüchtigen primären und sekundären Aminen mit einem pKb-Wert von minimal 3,1, unter den Bedingungen der genannten Hitzebehandlung flüchtigen tertiären Aminen und beliebigen Gemischen derartiger Basen,
verwendet.

**Claim**

A process for the production of water- and solvent-resistant sheet-form materials by coating heat-resistant substrates with a solution or dispersion - optionally containing standard coating auxiliaries and additives - of a polyisocyanate addition product containing incorporated anionic structural units in an aqueous solvent or dispersant and then heat-treating the coating at 60 to 200°C with volatilization or evaporation of the solvent or dispersant and simultaneous crosslinking of the polyisocyanate addition product applied to the substrate, characterized in that reaction products - containing incorporated anionic structural units of the formula

$$-NH-CO-\overset{\ominus}{N}-C\equiv N$$

in a quantity of 50 to 500 milliequivalents per 100 g
solids - of
NCO prepolymers based on (i) simple organic polyisocyanates having a molecular weight in the range from 168 to 300 or on (ii) modified polyisocyanates containing biuret, isocyanurate, uretdione or oxadiazinetrione groups of the type mentioned under (i) and any polyhydroxyl compounds known per se from polyurethane chemistry having a molecular weight in the range from 62 to 4000, the NCO prepolymers having been prepared at an NCO : OH equivalent ratio maintained at 1.2 : 1 to 8 : 1,
with
salts of cyanamide and bases selected from the group comprising ammonia, primary and secondary amines volatile under the heat-treatment conditions and having a pKb value of at least 3.1, tertiary amines volatile under the heat-treatment conditions and mixtures of such bases, are used as the polyisocyanate addition product.

**Revendication**

Procédé de fabrication d'articles à grande surface résistant à l'eau et aux solvants, par enduction de substrats résistant à la chaleur avec une solution ou dispersion, contenant éventuellement les auxiliaires et additifs en usage dans la technologie de l'enduction, d'un produit d'addition polyisocyanaté présentant des unités structurales anioniques incorporées, dans un milieu solvant ou dispersant, avec un traitement thermique consécutif du revêtement à 60- 200°C tout en évaporant ou vaporisant le solvant ou le dispersant et en réticulant simultanément le produit d'addition polyisocyanaté appliqué sur le substrat, caractérisé en ce qu'on utilise comme produit d'addition polyisocyanaté des produits de réaction, contenant des unités structurales anioniques incorporées de formule :

$$-NH-CO-\overset{\ominus}{N}-C\equiv N$$

en une quantité de 50 à 500 milliéquivalents par 100 g de matière solide ou sèche,
de prépolymères à NCO à base (i) de polyisocyanates organiques simples ayant un intervalle de poids moléculaires de 168 à 300 ou (ii) de polyisocyanates modifiés du genre cité en (i) et qui présentent des groupes biuret, isocyanurate, uretdione ou oxadiazinetrione, et de composés polyhydroxylés quelconques connus en eux-mêmes en chimie des polyuréthanes, qui présentent un intervalle de poids moléculaire de 62 - 4000, en l'occurrence les prépolymères à NCO ayant été préparés tout en respectant un rapport d'équivalence NCO/OH de 1,2 : 1 à 8 : 1, avec
des sels de cyanamide et de bases choisies dans le groupe consistant en ammoniac, en amines primaires et secondaires volatiles dans les conditions du traitement thermique et ayant une valeur de pKb au minimum de 3,1, en amines tertiaires volatiles dans les conditions du traitement thermique cité, et en des mélanges quelconques de ces bases.